# EUROPÄISCHE PATENTANMELDUNG

(11) **EP 2 383 093 A1**
(43) Veröffentlichungstag der Anmeldung: **02.11.2011**
(21) Anmeldenummer: 11003063.2
(22) Anmeldetag: 12.04.2011
(51) Int. Cl.: B29C 35/08, B29C 70/30

(54) **Faserverbundbauteil und Verfahren zu seiner Herstellung**

(30) Priorität: 27.04.2010 DE 102010018518
(71) Anmelder: Deutsches Zentrum für Luft- und Raumfahrt e. V., 51147 Köln (DE)
(72) Erfinder: Danilov, Maksim, 38106 Braunschweig (DE)
(74) Vertreter: Lins, Martina

(57) **Zusammenfassung**

Das Faserverbundbauteil, das Verstärkungsfasern und ein Matrixmaterial enthält und bei dem wenigstens ein Teil der Fasern in Form von Fasermateriallagen bereitgestellt wird, wird in einem Formwerkzeug unter Energieeintrag mittels Mikrowellen hergestellt. Um zu vermeiden, dass in einer Randzone des Laminatvorkörpers aufgrund von Arcing Überhitzung stattfindet, wird das Verfahren so geführt, dass ein Vorkörper (10) des Bauteils aus Fasern und ungehärteter Matrix auf ein Unterwerkzeug (20) aufgelegt und mit einer Fasermateriallage (51) wenigstens so abgedeckt wird, dass Oberflächenbereiche des Vorkörpers, in denen Fasern enden, oder der Rand (16) des Vorkörpers (10) überdeckt sind und die abdeckende Lage (51) am Rand ihres Überstandes (52) mit dem Unterwerkzeug (20) in Kontakt steht, und dass das so vorbereitete Faserverbundbauteil unter Energieeintrag ausgehärtet wird.

## Beschreibung

Die Erfindung betrifft ein Verfahren zum Herstellen eines Faserverbundbauteils, das Verstärkungsfasern und ein Matrixmaterial enthält und bei dem wenigstens ein Teil der Fasern in Form von Fasermateriallagen bereitgestellt wird, in einem Formwerkzeug unter Energieeintrag mittels Mikrowellen, sowie ein zugehöriges Bauteil.

Faserverstärkte Kunststoffe sind innovative Materialien, die aus wenigstens zwei Komponenten, nämlich Verstärkungsfasern und Kunststoffmatrix, bestehen, und die immer mehr Einzug in hochtechnologische Industriezweige wie Luft- und Raumfahrt und den Automobilbau finden. Faserverstärkte Kunststoffe ersetzen dort vielfach Metalle, um eine hohe Festigkeit bei geringem Gewicht zur Verfügung stellen zu können. Besondere Bedeutung kommt kohlenstofffaserverstärkten Thermoplasten und Duroplasten zu.

Die Prozessierung von kohlenstofffaserverstärkten Kunststoffen erfordert unter anderem thermische Energie. Die härtbare Matrixkomponente wird durch Polymerisation oder Härtung (häufig Polykondensation, Polyaddition) verfestigt und schließt die Fasern unter Bildung eines festen, mechanisch belastbaren Verbundes ein.

Fasern und Matrix können auf verschiedene Weise vorgelegt werden. Zum Einen können Fasern und Matrixmaterial gemischt und als Masse in eine Form eingebracht werden. Die Fasern können jedoch auch strukturiert vorgelegt und mit dem Matrixmaterial dann duchtränkt werden. Eine besondere Bedeutung kommt Laminaten zu, bei denen flächige Strukturen, nämlich Fasermateriallagen alternierend mit Matrixmaterial geschichtet oder bei denen getränkte Fasermateriallagen aufeinander geschichtet (aufgebaut) werden.

Der Eintrag von Energie für die Polymerisation bzw. Aushärtung zum Verbundmaterial erfolgt im Stand der Technik in der Regel durch Beheizen des Formwerkzeugs und/oder konvektive Umlufterwärmung. Eine alternative Möglichkeit, die zunehmend Bedeutung erlangt, liegt in der Nutzung der elektromagnetischen Feldenergie eines Mikrowellenfeldes. Durch die Mikrowellenstrahlung erfolgt der Energieeintrag nicht vom Rand her über Wärmeleitung, sondern durch gleichmäßige Anregungen der Moleküle im Gesamtvolumen. Auch bei dieser Energieeintragsmethode erfolgt die Formgebung des Kunststofffaserverbunds zum späteren Bauteil durch metallische Formwerkzeuge.

Durch die Geometrie des Vorkörpers und des Formwerkzeugs sind der Homogenität der Erwärmung jedoch Grenzen gesetzt. Die häufig verwendeten Kohlenstofffasern sind elektrisch leitend. Bestrahlt man das metallischen Formwerkzeug und den Vorkörper mit der Mikrowellenstrahlung bilden sich im Metall und den Verstärkungsfasern unterschiedliche elektrische Potentiale aus und es bilden sich Wand- und Wirbelströme. Potentialdifferenzen führen besonders am Rand des Vorkörpers zu Funkenüberschlägen (Arcing). Diese entstehen, wenn zwischen zwei Punkten mit unterschiedlichen Potentialen keine leitende Verbindung besteht und die elektrische Spannung groß genug ist, um die Durchschlagsfestigkeit des Mediums zwischen diesen Punkten in Form einer Entladung zu überwinden. Der entstehende elektrische Strom erzeugt lokal Plasma, das aufgrund der hohen Temperatur prozessgefährdend ist. Üblicherweise tritt Arcing am Rand des Vorkörpers zwischen den Faserenden untereinander und mit dem metallischen Formwerkzeug auf. Die Bestrahlung mit Mikrowellen führt allgemein in einer Randzone eines Laminatvorkörpers zu höheren Temperaturen als in der Vorköpermitte, bei hohen Temperaturgradienten zum Rand hin.

Zur Überwindung dieses Effekts ist es aus der DE 10 2007 050 312 A1 bekannt, zwischen dem metallischen Formwerkzeug und dem Vorkörperrand eine leitende Verbindung herzustellen. Zu diesem Zweck wird der Laminatrand vom Formwerkzeug eingefasst, indem der Vorkörperrand zumindest abschnittsweise in Kontakt mit einem metallischen Teil des Formwerkzeugs gebracht wird. Durch diese Maßnahme wird die Feldstärke im Randbereich des Laminats reduziert, was die Wahrscheinlichkeit des Arcings, aber auch den Energieeintrag mindert.

Bei dem bekannten Verfahren ist nachteilig, dass sich durch die metallische Abschirmung am Rand nachteilige Auswirkungen auf die Prozessgüte ergeben. Durch die Randeinfassung kann eine Abschirmung entstehen, die den Energieeintrag am Rand des Laminats verringert, so dass Wärme aus der Mitte des Laminats zum Rand transportiert werden muss. Dieser Effekt ist für den Energiehaushalt des Verfahrens nachteilig; die Temperierung wird verzögert, was zu einem Anstieg der Fertigungszeiten führt. Durch Integration der Abschirmungen steigt die Komplexität des Fertigungsaufbaus, was seine Fehleranfälligkeit erhöht. Die Randeigenschaften werden dadurch verungleichmäßigt, was zu Delaminierungen beim Gebrauch des Bauteils führen kann. Schließlich müssen die Formwerkzeuge für jede Bauteilform auf den Rand des Vorkörpers angepasst werden.

Der Erfindung liegt die Aufgabe zugrunde, die Nachteile im Stand der Technik zu vermeiden, eine gleichmäßige Temperaturentwicklung über das Bauteilvolumen zu gewährleisten und die Wahrscheinlichkeit des Arcings herabzusetzen.

Zur Lösung dieser Aufgabe weist das Verfahren der eingangs genannten Art die kennzeichnenden Merkmale des Anspruchs 1 auf.

Erfindungsgemäß wird der Vorkörper des Faserverbundbauteils aus Fasern und ungehärteter Matrix auf ein Unterwerkzeugs aufgelegt, wobei das gesamte Formwerkzeug allein aus diesem Unterwerkzeug bestehen kann. Das Formwerkzeug bzw. mindestens das Unterwerkzeug kann formgebend, beispielsweise schalenförmig, wellenförmig oder dergleichen sein, oder es kann sich um eine einfache ebene metallische Basisplatte handeln.

Das Faserverbundbauteil ist vorzugsweise ein flächiger Körper, der mit seiner Grundfläche auf dem Unterwerkzeug aufliegt, wobei dann die Bauteiloberseite von vergleichbarer Größe wie die Unterseite ist und die Oberseite der Mikrowellenstrahlung ausgesetzt wird. Zwischen Ober- und Unterseite besitzt das Bauteil in der Regel einen vergleichsweise schmalen umlaufenden Rand.

Das Formwerkzeug kann jedoch zusätzlich, wenn auch nicht vorzugsweise, ein Oberwerkzeug umfassen, z.B. in Form eines Stempels. Der Stempel kann im Anschluss an die Mikrowellenexposition zum Einsatz kommen und das Bauteil zusätzlich von oben formen. Das Oberwerkzeug kann auch mikrowellendurchlässig sein und dann gleichzeitig mit der Mikrowellenbestrahlung zum Einsatz kommen.

Erfindungsgemäß wird nun der auf das Unterwerkzeug aufgelegte Vorkörper mit einer Fasermateriallage wenigstens so abgedeckt, dass Oberflächenbereiche des Vorkörpers, in denen Fasern enden überdeckt sind. Häufig, beispielsweise bei einem Laminat, ist dieser Bereich der Rand des Verbundbauteils, so dass wenigstens dieser Rand von der Fasermateriallage überdeckt wird. Bei unidirektionaler Faserorientierung enden die Fasern nur in bestimmten Randbereichen, so dass es gemäß einer weiteren Ausführungsform möglich ist, gezielt nur diese Randbereiche abzudecken.

In jedem Falle ist erfindungsgemäß vorgesehen, dass die abdeckende Lage an ihrem Rand mit dem Unterwerkzeug in Kontakt steht, so dass eine vollständige Überdeckung der Faserendbereiche des Vorkörpers bzw. bevorzugt des Laminats sichergestellt ist und gleichzeitig eine elektrische Abschirmung der Faserendbereiche vorgenommen wird, wobei hierdurch ein Arcing wirksam vermieden werden kann.

Die Vorteile gegenüber dem Stand der Technik sind vielfältig. Zum Einen beinhaltet ein derartiger Fertigungsaufbau keine zusätzlichen oder unnötigen metallische Komponenten, was die Prozesssicherheit erhöht. Zum Anderen ist keine aufwendige Bearbeitung oder Anpassung des Formwerkzeugs nötig, was die Kosten reduziert, da sich beispielsweise ähnlich geformte Bauteile unterschiedlicher Abmessungen innerhalb eines größeren Formwerkzeugs unproblematisch darstellen lassen. Letztlich ist die Nachbearbeitung des fertigen Bauteils nach der Aushärtung vereinfacht, da keine metallischen Komponenten manuell entfernt werden müssen. Die überstehenden Bereiche der Fasermateriallage an dem fertigen Verbundbauteil können spanend z.B. durch Fräsen entfernt werden.

In einer bevorzugten Ausführungsform ist die Fasermateriallage eine flächige Struktur, d.h. eine solche mit im Wesentlichen zweidimensionaler Ausdehnung. Besonders vorteilhaft können Matten aus einem Fasergewebe, einem Faservlies oder einem Fasergewirk verwendet werden. Ebenfalls einsetzbar sind Anordnungen unidirektional gelegter Fasern. Dies kann auch mehrlagig kreuzweise geschehen bzw. in bestimmten Raumrichtungen, um dem Bauteil gezielt bestimmte, auch anisotrope Eigenschaften zu verleihen. Die Fasermateriallagen können trocken zu dem Vorkörper zusammengefügt und dann mit Matrixmaterialien getränkt werden oder sie können vorab mit Matrixmaterial getränkt und dann eingesetzt werden. Mit Matrixmaterial imprägnierte Fasermateriallagen sind in verschiedenen Ausführungsformen kommerziell erhältlich und werden auch als Prepregs bezeichnet. Auch Prepregs können, wie die trockenen Fasern, zusätzlich noch getaucht oder mit Matrixmaterial bestrichen werden.

In einer besonders bevorzugten Ausführungsform wird der Vorkörper durch ein Laminat aus Fasermateriallagen gebildet. Hierfür werden wiederum vorzugsweise Prepregs verwendet. Derartige Laminate besitzen aufgrund der durchgehend geordneten Faserstruktur im Bauteil besondere Eigenschaften, die häufig bevorzugt werden. Nachteilig kann sein, dass hauptsächlich Bauteile gleichmäßiger Dicke ausgebildet werden können. Es sind daher auch Bauteilstrukturen bekannt, bei denen Laminatschichten an bestimmten Positionen mit einer Masse aus Fasern und Matrixmaterial unterfüttert werden. Auf diese Weise sind auch anders geformte Bauteile herstellbar.

Gemäß einer besonders bevorzugten Ausführungsvariante wird der gesamte an das Unterwerkzeug angrenzende umlaufende Rand des Verbundbauteils mit der Fasermateriallage abgedeckt. Hierfür ist es weiter bevorzugt, dass der Vorkörper vor dem Aushärten mit einer allseits überlappenden Fasermateriallage insgesamt abgedeckt ist.

Praktisch kann also die oberste Lage in der Laminatarchitektur insgesamt größere Abmessungen aufweisen als die restlichen Lagen. Der Rand der obersten überstehenden Lage wird durch das Eigengewicht oder durch Anpressen mittels Überdruck über die Ränder der übrigen Lagen gelegt und deckt diese ab. Der Überstand muss so gewählt sein, dass der Rand der abdeckenden Fasermateriallage mit dem Formwerkzeug bzw. dem Unterwerkzeug des Formwerkzeugs in Kontakt tritt, d.h. dieses wenigstens berührt bzw. im Abdecklagenrandbereich aufliegt. Dies führt zur Abschirmung der Ränder der tiefer liegenden Lagen in einem Faraday'schen Käfig, was die Wahrscheinlichkeit des Arcings herabsetzt. Gleiches gilt für Bauteile, die keine Laminate bilden und lediglich mit einer Faserlage abgedeckt sind. Auch hier wird das Arcing an Faserenden, die senkrecht in die Randzone des Vorkörpers münden, wirksam verhindert.

In einer alternativen Ausführungsform kann vorgesehen sein, dass lediglich der Vorkörperrand mit einem Streifen aus einer Fasermateriallage abgedeckt wird. Diese Möglichkeit bietet sich insbesondere bei komplexen Faserlaminaten an. Wird nur der Rand des Laminats bzw. des Bauteils mit dem Fasermateriallagenstreifen geschützt, entstehen am ausgehärteten Bauteil zwei Überstände, die ggf. besäumt werden müssen. In jedem Fall ist die Nachbearbeitung wesentlich vereinfacht, da die Abschirmung aus demselben Material besteht, wie das Faserverbundbauteil als solches, so dass keine zusätzlichen Bearbeitungsschritte für die Entfernung beispielsweise eines metallischen Folienstreifens, wie als Abschirmung aus dem Stand der Technik bekannt, notwendig sind.

Wie bereits erwähnt, kann das Unterwerkzeug vorzugsweise aus einer metallischen Basisplatte bestehen und zwar besonders bevorzugt aus einer ebenen metallischen Basisplatte. Ein solches Formwerkzeug bietet sich besonders für die Herstellung eines laminatförmigen Faserverbundbauteils aus Verstärkungsfasern und Thermoplast an, da solche Bauteile nach dem Aushärten noch leicht umgeformt werden können.

In einer weiteren bevorzugten Ausführungsform der Erfindung wird während der Aushärtung des Verbundbauteils zusätzlich Druck durch ein Oberwerkzeug auf das Verbundbauteil ausgeübt. Der Druck bewirkt gleichzeitig eine Verformung, aber auch eine Verdichtung des Materials, die zur Erzielung besonderer Eigenschaften gewünscht sein können.

Nach dem Aushärten des Bauteils kann sich wenigstens einer der weiteren Arbeitsschritte Umformen, Biegen, Schneiden, Schleifen, Reinigen, Beschichten, Ätzen und Verbauen anschließen.

Weiterhin kann es vorgesehen sein, das Formwerkzeug zu kühlen. Ob dies erforderlich erscheint, hängt von der Exothermie des Aushärtungsprozesses ab. Die Aufgabe der Erfindung wird weiter gelöst durch ein Faserverbundbauteil, welches insbesondere mit dem vorstehend beschriebenen erfindungsgemäßen Verfahren erhalten werden kann. Das erfindungsgemäße Faserverbundbauteil ist gekennzeichnet durch eine äußere Verstärkungsfaserlage, die wenigstens teilweise quer zu anderen Verstärkungsfaserlagen oder Faserenden unterliegender Verstärkungsfasern des Bauteils verläuft und deren Ränder oder Enden überdeckt. Die Abdecklage fasst dadurch den Rand des Bauteils ein. Im Randbereich bis zum Kontakt mit dem Unterwerkzeug verläuft die Abdecklage quer zu anderen auf dem Unterwerkzeug aufliegenden Lagen. Die äußere Verstärkungsfaserlage muss das Bauteil nicht vollständig überdecken, sondern kann beispielsweise einen Streifen bilden, der den Randbereich eines Laminats - überdeckt. In einer weiteren bevorzugten Ausführungsform bildet die äußere Verstärkungsfaserlage die wenigstens teilweise quer zur anderen Verstärkungsfaserlagen oder Faserenden liegt, eine Abdeckung für das Oberteil und den Rand des Bauteils. Durch die vollständige Überdeckung der Schnittkanten von Fasermateriallagen wird in besonders vorteilhafter Weise auch ein Delaminieren von Laminatkörpern vermieden.

In besonders bevorzugter Ausführungsform umfassen die Verstärkungsfasern Kohlenstofffasern bzw. bestehen vollständig aus diesen. Außer für Kohlenstofffasern ist die Erfindung für andere leitende Verstärkungsfasern geeignet.

Das Matrixmaterial des Verbundbauteils kann vorzugsweise ein thermoplastischer oder duroplastischer Kunststoff sein, der ggf. Zusatz- und Hilfsstoffe wie Füllstoffe und andere weitere Verstärkungsmaterialien enthält. Das Faserverbundbauteil kann weiterbearbeitet und mit anderen Bauteilen oder Elementen verbunden sein.

Im Folgenden wird die Erfindung anhand von in der Zeichnung dargestellten Ausführungsbeispielen näher erläutert. Dabei zeigt:
Abbildung 1 - eine schematische Querschnittsdarstellung eines Laminatvorkörpers auf einem plaltenförmigen Formwerkzeug (Stand der Technik) mit zugeordnetem Temperaturverlauf über dem Bauteilquerschnitt im Falle einer mikrowellenbasierten Erwärmung;
Abbildung 2 eine schematische Querschnittsdarstellung eines Laminatvorkörpers gemäß der Erfindung mit durchlaufender Abdecklage auf einem Formwerkzeug;
Abbildung 3 - eine schematische Querschnittsdarstellung eines anderen Ausführungsbeispiels des Laminatvorkörpers auf einem plattenförmigen Formwerkzeug mit streifenförmigen Fasermaterialabdecklagen.

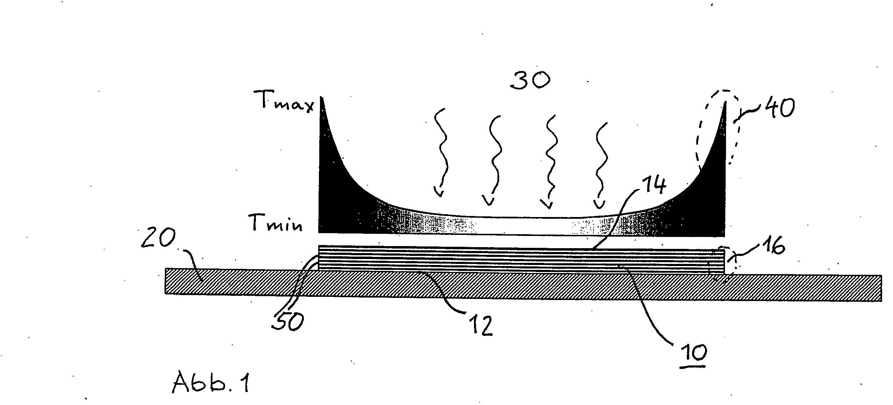

Abbildung 1 zeigt einen Vorkörper 10 aus einem Laminat, das aus einzelnen Lagen 50 eines imprägnierten Fasermaterials (Prepregs) geschichtet ist. Der Vorkörper 10 liegt mit seiner Grundfläche bzw. Unterseite 12 auf einem Formwerkzeug 20 auf; die Kontur des fertigen Faserverbundbauteils wird sich an das Formwerkzeug 20 anpassen. Die Oberseite 14 des Vorkörpers 10 wird durch Mikrowellen 30 bestrahlt und hierdurch durchgehend erwärmt. Während der Mikrowellenbestrahlung tritt die Aushärtung durch Polymerisation oder sonstige Härtung ein. Aufgrund der flächig strukturierten Faserlagen innerhalb des Vorkörpers 10 münden die Faserenden an den Schnittkanten der Faserlagen sämtlich in den seitlich umlaufenden Rand 16 des Vorkörpers 10. In Randbereich 16 ist die Gefahr des Arcing besonders groß. Über die Breite des Vorkörpers ist zusätzlich schematisch der Temperaturverlauf entlang der Breitenausdehnung nach einer gewissen Aufheizzeit aufgetragen. Wie im Randbereich 40 der Temperaturkurve zu erkennen, weist der Temperaturverlauf relativ zum Mittelwert am Rand des Bauteils extreme Spitzen auf, mit einem hohen Gradienten, d.h. starken Abfall zur Bauteilmitte.

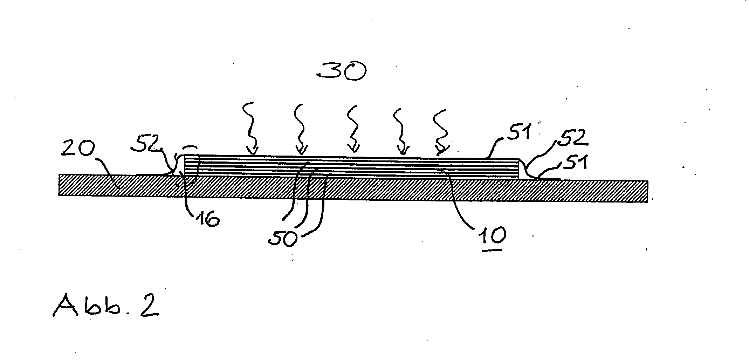

Abbildung 2 zeigt eine erste erfindungsgemäße Ausführungsform in entsprechender Querschnittsdarstellung, bei der der Vorkörper 10, wiederum aufliegend auf dem Formwerkzeug 20, von einer Fasermateriallage 51 in Form einer allseitig im Vergleich zu den Vorkörpermateriallagen 50 mit Überstand bemessenden Kohlenstofffasermatte abgedeckt ist. Der Überstand 52 der abdeckenden Fasermateriallage 51 deckt den gesamten Randbereich 16 des Vorkörpers 10 ab und bildet durch den Kontakt mit dem Formwerkzeug 20 eine elektrische Brücke bzw. einen Faraday'schen Käfig. Der Randbereich 16 des Vorkörpers 10 wird auf diese Weise elektrisch abgeschirmt. Das Arcing kann wirkungsvoll vermieden werden. Nach dem Aushärten wird der Überstand 52 rundum abgefräst und der Vorkörper 10 wird durch Schleifen endbearbeitet. Sofern sich der Überstand 52 im Laufe der Erwärmung an den Randbereich 16 durch Eigengewicht oder Druck von außen anlegt, werden auch am fertigen Bauteil die Faserenden des Laminats im Randbereich 16 wirksam gegen mechanische Beschädigung und insbesondere Delaminieren geschützt.

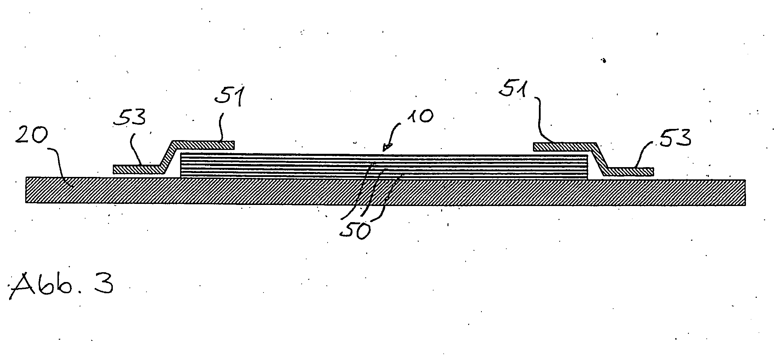

Abbildung 3 zeigt ein alternatives Ausführungsbeispiel in entsprechender Querschnittsansicht, bei dem die Randabdeckung für den Vorkörper 10 durch streifenförmige Abdecklagen 53 verwirklicht wird.

### Tests

Um die Innovationspotentiale der entwickelten Methode darzustellen, wurden vereinfachte Erwärmungsversuche durchgeführt. Ein aus gewebeartig vernetzten Kohlenstofffasern bestehendes Laminat wurde auf zwei unterschiedliche Arten abgeschirmt und in einer Mikrowellenkammer dem Mikrowellenfeld ausgesetzt. Dabei wurde an den Punkten, die erfahrungsgemäß als prozesskritisch bekannt sind, und in der Laminatmitte die Temperatur gemessen. Die Ergebnisse wurden mit einem Erwärmungsversuch verglichen, bei dem die Ränder des Laminats nicht abgeschirmt waren.
1.) Bei einem freien Laminatrand wurde erwartungsgemäß festgestellt, dass die Temperaturen am Rand höher als in der Mitte des Laminats waren und am höchsten an den Ecken des Laminats (bei rechteckigem bzw. flach quaderförmigem Laminatversuchskörper). Der Versuch konnte nicht bis zum Ende, d.h. zum vollständigen Erschmelzen und Verfestigen des Faserverbundbauteils durchgeführt werden, sondern musste vorzeitig abgebrochen werden, da an den Laminaträndern Arcing auftrat.
2.) Ein weiterer Erwärmungsversuch wurde mit einer streifenförmigen metallischen Abschirmung durchgeführt. Der Versuch konnte zu Ende durchgeführt werden. Aufgrund der metallischen Abschirmung war die Wärmeentwicklung in den Ecken des Laminats reduziert, die Temperatur in der Laminatmitte lag nun um ca. 25% höher als in den Ecken. Obwohl die Prozesssicherheit offensichtlich zugenommen hatte, war die Temperaturverteilung auch hier nicht annähernd homogen und damit nicht zufrieden stellend.
3.) Ein dritter Versuch wurde mit einer erfindungsgemäßen Abschirmung mit Kohlenstofffasergewebe durchgeführt. Die rechteckige Oberfläche des Laminats wurde mit einer allseitig überstehenden Abdecklage aus einem Kohlenstofffasergewebe abgedeckt. Der Versuch konnte erfolgreich beendet werden. Während des Versuchs trat kein Arcing auf. Die Temperaturmesswerte lagen an allen Messpunkten dicht aneinander. Zwischen den Laminatecken und der Laminatmitte war nur ein sehr geringer Temperaturgradient vorhanden. Ohne Verlust an Prozesssicherheit war der mittlere Temperaturanstieg wesentlich höher als bei den vorausgegangenen Versuchen.

Dies zeigt, dass das erfindungsgemäße Verfahren energieeffizient arbeitet und gleichzeitig zu einer Verfahrensbeschleunigung beiträgt.

## Patentansprüche

1. Verfahren zum Herstellen eines Faserverbundbauteils, das Verstärkungsfasern und ein Matrixmaterial enthält und bei dem wenigstens ein Teil der Fasern in Form von Fasermateriallagen (50) bereitgestellt werden, in einem Formwerkzeug (20) unter Energieeintrag mittels Mikrowellen, **dadurch gekennzeichnet, dass** ein Vorkörper (10) des Bauteils aus Fasern und ungehärteter Matrix auf ein Unterwerkzeug (20) aufgelegt und mit einer Fasermateriallage (51) wenigstens so abgedeckt wird, dass Oberflächenbereiche des Vorkörpers, in denen Fasern enden, überdeckt sind und die abdeckende Lage (51) am Rand ihres Überstands (52) mit dem Unterwerkzeug (20) in Kontakt steht, und dass das so vorbereitete Faserverbundbauteil unter Energieeintrag ausgehärtet wird.

2. Verfahren nach Anspruch 1, **dadurch gekennzeichnet, dass** die Fasermateriallage (50, 51) eine flächige Struktur, insbesondere eine Matte aus einem Fasergewebe, einem Faservlies oder einem Fasergewirk oder eine Anordnung unidirektional gelegter Fasern ist, jeweils optional mit Matrixmaterial imprägniert, getränkt oder bestrichen.

3. Verfahren nach Anspruch 1 oder 2, **dadurch gekennzeichnet, dass** der Vorkörper (10) ein Laminat aus Fasermateriallagen (50, 51) ist, die vorzugsweise als Prepregs ausgebildet sind.

4. Verfahren nach einem den Ansprüche 1 bis 3, **dadurch gekennzeichnet, dass** der gesamte an das Unterwerkzeug (20) angrenzende, umlaufende Rand (16) des Vorkörpers (10) abgedeckt ist.

5. Verfahren nach einem der Ansprüche 1 bis 4, **dadurch gekennzeichnet, dass** der Vorkörper (10) vor dem Aushärten mit einer allseits überlappenden Fasermateriallage (51) abgedeckt ist.

6. Verfahren nach einem der Ansprüche 1 bis 4, **dadurch gekennzeichnet, dass** der Vorkörperrand (16) mit einem Streifen (53) aus einer Fasermateriallage (50) abgedeckt ist.

7. Verfahren nach einem der Ansprüche 1 bis 6, **dadurch gekennzeichnet, dass** das Unterwerkzeug (20) eine vorzugsweise metallische Basisplatte ist.

8. Verfahren nach einem der Ansprüche 1 bis 7, **dadurch gekennzeichnet, dass** während der Aushärtung des Verbundbauteils zusätzlich Druck durch ein Oberwerkzeug auf das Verbundbauteil ausgeübt wird.

9. Verfahren nach einem der Ansprüche 1 bis 8, **dadurch gekennzeichnet,dass** sich wenigstens einer der weiteren Arbeitsschritte Umformen, Biegen, Schneiden, Schleifen, Reinigen, Beschichten, Ätzen und Verbauen anschließt.

10. Faserverbundbauteil, insbesondere erhältlich mit einem Verfahren nach einem der Ansprüche 1 bis 9, das Verstärkungsfasern und ein Matrixmaterial enthält, wobei wenigstens ein Teil der Fasern in Form von Fasermateriallagen (50) vorliegt und bei dem eine äußere Verstärkungsfaserlage (51) wenigstens teilweise quer zu anderen Verstärkungsfaserlagen (50) oder Faserenden unterliegender Verstärkungsfasern des Bauteils verläuft und deren Ränder oder Enden überdeckt, **dadurch gekennzeichnet, dass** entweder die oberste und äußere mit dem Bauteil verbundene Verstärkungsfaserlage (51) insgesamt größere Abmessungen aufweist als die restlichen Lagen (50) und die Ränder (16) der übrigen Lagen abdeckt oder dass die äußere mit dem Bauteil verbundene Verstärkungsfaserlage (51) einen Streifen (53) bildet, der den Randbereich (16) des Laminats des Bauteils überdeckt, so dass die Abdeckung des Bauteilrandes durch die äußere Verstärkungsfaserlage (51) oder den Streifen (53) in beiden Fällen die Schnittkanten der Fasermateriallagen (50) vollständig überdeckt.

11. Bauteil nach Anspruch 10, **dadurch gekennzeichnet, dass** die Verstärkungsfasern Kohlenstofffasern umfassen.

12. Bauteil nach Anspruch 10 oder 11, **dadurch gekennzeichnet, dass** das Matrixmaterial thermoplastischer oder duroplastischer Kunststoff ist.
